# EUROPÄISCHE PATENTSCHRIFT

(11) **EP 0 821 221 B1**
(45) Veröffentlichungstag und Bekanntmachung des Hinweises auf die Patenterteilung: **21.03.2001**
(21) Anmeldenummer: 97111144.8
(22) Anmeldetag: 03.07.1997
(51) Int. Cl.: G01F 7/00

(54) **Verbundwasserzähler**
Compound water meter
Compteur d'eau composé

(30) Priorität: 26.07.1996 DE 19630158
(43) Veröffentlichungstag der Anmeldung: 28.01.1998
(73) Patentinhaber: Hydrometer GmbH, D-91522 Ansbach (DE)
(72) Erfinder: Schlötterer, Werner, 91604 Flachslanden (DE); Lacher, Ewald, 91522 Ansbach (DE)
(74) Vertreter: Matschkur, Lindner Blaumeier Patent- und Rechtsanwälte

(56) Entgegenhaltungen:
- DE-A- 3 740 531
- DE-A- 3 924 147
- DE-C- 422 513
- US-A- 4 437 344

## Beschreibung

Die Erfindung bezieht sich auf einen Verbundwasserzähler, bestehend aus einem an eine Hauptleitung anschließbaren Hauptzähler zur Erfassung größerer Durchflußmengen und einem in einer Umgehungsleitung angeordneten Nebenzähler zur Erfassung kleinerer Durchflußmengen, wobei dem Meßeinsatz des Hauptzählers ein mit ihm verbundener, den Durchgang durch die Hauptleitung bei Erreichen eines vorbestimmten Druckes öffnender Schaltventileinsatz nachgeschaltet ist und der Meßeinsatz des Hauptzählers ebenso wie der Nebenzähler in einem Gehäuse mit einer das Gehäuse in eine stromaufwärtige und eine stromabwärtige Kammer unterteilenden Querwand mit einer Durchlaßöffnung zwischen den beiden Einsätzen angeordnet sind, mit dessen Deckel sie in Verbindung stehen derart, daß sie als Einheit ausbaubar sind.

Bei einem derartigen aus der US-Patentschrift 4 437 344 bekanntgewordenen Verbundwasserzähler ist die Querwand am Gehäuse angeformt, wobei der Hauptzähler und der Nebenzähler auf entgegengesetzten Seiten des Deckels liegen. Der Schaltventileinsatz ist unmittelbar auf der dem Meßeinsatz des Hauptzählers gegenüberliegenden Seite an der Querwand befestigt.

Diese bekannte Ausbildung eines Verbundwasserzählers ist zum einen relativ kompliziert aufgebaut und erfordert eine komplexe und daher störanfällige Abdichtung des am Deckel befestigten Meßeinsatzes des Hauptzählers, der beim Schließen des Deckels durch eine Öffnung in das Gehäuse eingefädelt wird und durch das bloße Verschieben dichtend an einer Gegendichtfläche der Querwand anliegen soll. Dies erfordert eine gewisse Verkippung und/oder Verschiebung, um tatsächlich einen Dichtsitz zu erzielen.

Hinzu kommt, daß ein solcher Verbundwasserzähler nicht mit einem beglaubigungsfähigen Einsatz ausgebildet sein kann, bei dem die am Deckel hängenden Teile zunächst als separates Bauteil geeicht werden können, das dann lediglich doch auf das Gehäuse, das in die Hauptleitung nach wie vor fest eingebaut ist und lediglich durch Schieber abgesperrt ist, aufgesetzt wird, um in den regelmäßigen Eichabständen die Eichung des Verbundwasserzählers durchzuführen. Dies wird bei dem Verbundwasserzähler der US-Patentschrift 4 437 344 allein dadurch verhindert, daß der Schaltventileinsatz fest an der einstückig mit dem Gehäuse verbundenen Querwand befestigt ist und somit nicht als Austauschteil am Deckel hängend mit diesem ein- und ausgebaut werden kann.

Aus der deutschen Patentschrift DE 39 24 147 C2 ist zwar bereits ein Verbundwasserzähler mit einem beglaubigungsfähigen Einsatz bekanntgeworden, bei dem alle zu eichenden Teile, also auch der Schaltventileinsatz am Deckel hängen und mit diesem aus- und eingebaut werden. Bei dem Verbundwasserzähler nach dieser deutschen Patentschrift liegt der Nebenzähler aber außerhalb des Gehäuses in der als U-förmiger Bypass ausgebildeten, komplizierte gegossene, zur Wasserführung, dienende Kammern des Deckels verbindenden, Umgehungsleitung. Dies erfordert, noch dazu in Verbindung mit der komplizierten Befestigung des Nebenzählers zwischen den koaxial einander gegenüberstehenden Stutzen der Umgehungsleitung, insgesamt einen enormen Bauaufwand. Die Umgehungsleitung muß dabei zusätzlich äußerst dick und stabil ausgebildet sein, um den hohen Betriebsdrücken von 16 Bar (Prüfdrücke sogar bis über 30 Bar) standzuhalten.

Der Erfindung liegt daher die Aufgabe zugrunde, einen Verbundwasserzähler der eingangs genannten Art so auszugestalten, daß bei einem sehr einfachen und damit auch störunanfälligen Aufbau der Deckel mit den daran hängenden Meßeinrichtungen als beglaubigungsfähiger Einsatz ausgebildet sein kann.

Zur Lösung dieser Aufgabe ist erfindungsgemäß vorgesehen, daß die Querwand am Deckel befestigt und durch Dichtungen gegen das Gehäuse abgedichtet ist, daß der Meßeinsatz des Hauptzählers und der Nebenzähler beide auf der stromaufwärtigen Seite der Querwand am Deckel befestigt sind und daß die Umgehungsleitung ein den Auslaß des Nebenzählers, dessen Einlaß in der Einsetzausnehmung des Deckels liegt, mit einer Ausnehmung der Querwand verbindendes, innerhalb der stromaufwärtigen Kammer liegendes kurzes Verbindungsrohr ist.

Durch die erfindungsgemäße Ausbildung ergibt sich ein äußerst kompakter Aufbau, wobei die Anordnung der Umgehungsleitung innerhalb des Naßraums den großen Vorteil mit sich bringt, daß diese Umgehungsleitung nur die Druckdifferenz zwischen der stromaufwärtigen Kammer und der stromabwärtigen Kammer aushalten muß, die etwa 1 Bar beträgt. Die außerhalb des Gehäuses liegende Umgehungsleitung gemäß der eingangs angesprochenen deutschen Patentschrift muß den vollen Betriebsdruck von 16 Bar (Prüfdrücke sogar bis über 30 Bar) aushalten. Für die erfindungsgemäße Konstruktion bedeutet dies, daß das die Umgehungsleitung bildende kurze Verbindungsrohr sehr dünnwandig ausgebildet sein kann. Gegenüber dem Verbundwasserzähler nach der US-Patentschrift 4 437 344 ergibt sich außer dem Vorteil des erfindungsgemäßen Verbundwasserzählers einen beglaubigungsfähigen Einsatz zu haben, der zusätzliche Vorteil, daß die Abdichtung beim Aufsetzen des Deckels sehr viel leichter bewerkstelligt werden kann, da das Abdichten der Querwand im Gehäuse durch eine quasi umlaufend auf seine Stirnkante aufgesetzte Dichtung erheblich einfacher und sicherer realisiert werden kann, als die komplizierte Dichtanlage des Meßeinsatzes des Hauptzählers an der gehäusefesten Querwand.

Um den Aufbau noch kürzer und kompakter zu machen, indem der Haupt- und Nebenzähler auf dem Deckel in Durchflußrichtung stärker versetzt werden, so daß sie umgekehrt in Querrichtung stärker einander angenähert werden können, kann in Ausgestaltung der Erfindung auch vorgesehen sein, daß die Querwand im wesentlichen Z-förmig gewinkelt ist und daß der Nebenzähler direkt über dem auf dem Gehäuseboden aufsitzenden unteren Hauptabschnitt der Querwand angeordnet ist, während das Verbindungsrohr der Umgehungsleitung in das abgewinkelte Zwischenstück einmündet.

In an sich bekannter Weise kann dabei dem Nebenzähler ein Steuerventil zum Steuern des Schaltpunktes des Schaltventileinsatzes nachgeschaltet sein, wobei dieses Steuerventil bevorzugt in der Umgehungsleitung, möglichst unmittelbar hinter dem Auslaß des Nebenzählers angeordnet sein soll.

Ein derartiges Steuerventil läßt sich dabei vorteilhafterweise als Rückschlagventil ausbilden, so daß auch unter ungünstigen Umständen ein Zurückströmen des Wassers über die Umgehungsleitung und damit ein Rückwärtszählen nicht möglich ist.

Anstelle des vorstehend angesprochenen Steuerventils in der Umgehungsleitung zum Steuern des Schaltpunkts des Schaltventileinsatzes kann gemäß einer Weiterbildung der vorliegenden Erfindung auch vorgesehen sein, daß die Umgehungsleitung in einen entsprechend ausgestalteten Schaltventileinsatz einmündet und auf diese Weise ein direktes Steuern des Schaltpunktes stattfindet, bei dem - allerdings auf Kosten eines entsprechend komplizierter ausgebildeten Schaltventileinsatzes - das Steuerventil vermeidbar ist.

Das die Umgehungsleitung bildende Verbindungsrohr kann sowohl an der Querwand angeformt sein, als auch als separates Bauteil, vorzugsweise aus Kunststoff, gefertigt sein, das an der Querwand vorzugsweise lösbar befestigt, insbesondere angeschraubt ist. Diese getrennte Fertigung und Befestigung des Verbindungsrohrs an der Querwand vereinfacht das Gießen des Deckels. Darüber hinaus ermöglicht es die Ausbildung des Verbindungsrohrs aus einem anderen, billigeren Werkstoff, wie vorzugsweise Kunststoff, was durch die erfindungsgemäße Anordnung des Verbindungsrohrs innerhalb des Naßraums erst möglich ist, da das Verbindungsrohr bei der erfindungsgemäßen Konstruktion ja allenfalls Drücke von etwa einem Bar aushalten muß.

Schließlich liegt es auch noch im Rahmen der Erfindung, im Deckel einen Einsatz, vorzugsweise aus Messing einzubringen, der zur Aufnahme der kompletten Meßpatrone des Nebenzählers dienen kann.

Weitere Vorteile, Merkmale und Einzelheiten der Erfindung ergeben sich aus der nachfolgenden Beschreibung zweier Ausführungsbeispiele sowie anhand der Zeichnung. Dabei zeigen:
- Fig. 1: eine Draufsicht von oben auf den Deckel eines erfindungsgemäßen Verbundzählers,
- Fig. 2: einen Schnitt längs der Linie II-II in Fig. 1,
- Fig. 3: Hauptzähler und den Nebenzähler,
- Fig. 4: eine teilweise aufgebrochene Aufsicht auf eine zweite Ausführungsform, bei der das Verbindungsrohr der Umgehungsleitung nicht direkt in die stromabwärtige Kammer, sondern in den Schaltventileinsatz zur Unterstützung des Schaltpunktes einragt,
- Fig. 5: einen der Fig. 2 entsprechenden Schnitt durch eine dritte Ausführungsform eines erfindungsgemäßen Verbundzählers,
- Fig. 6: einen Schnitt entsprechend den Fig. 2 und 5 durch eine vierte Ausführungsform,
- Fig. 7: einen Schnitt entsprechend Fig. 6 durch eine dieser vierten Ausführungsform ähnliche fünfte Ausführungsform, und
- Fig. 8: eine der Draufsicht nach Fig. 1 entsprechende Draufsicht auf die Ausführungsform nach Fig. 7.

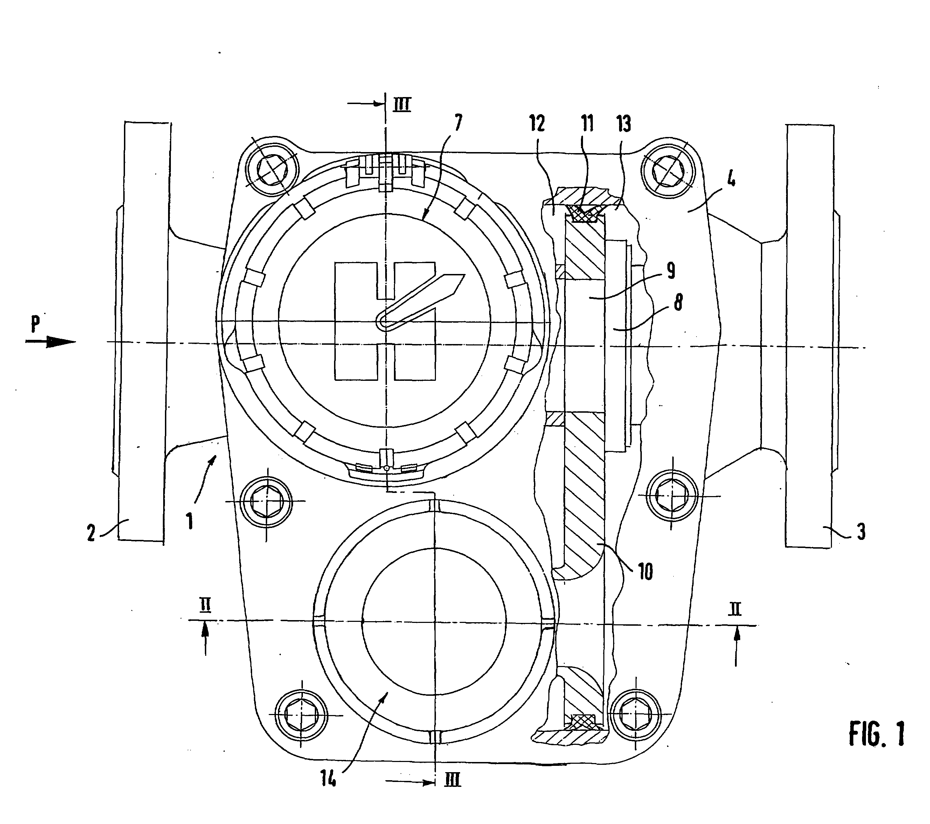

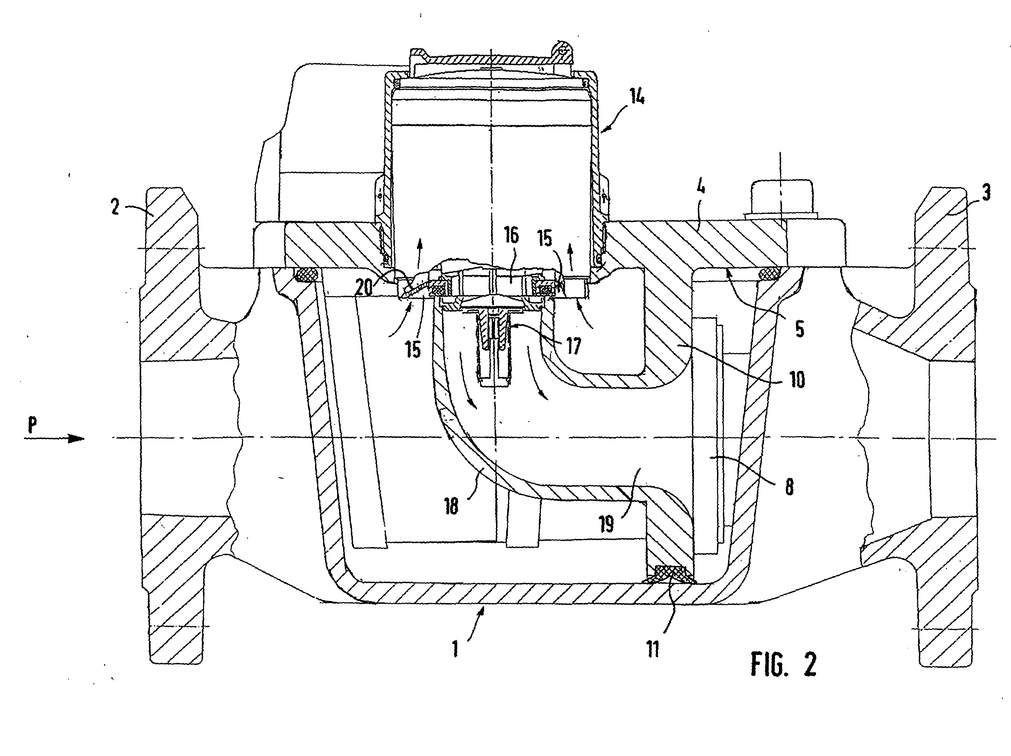

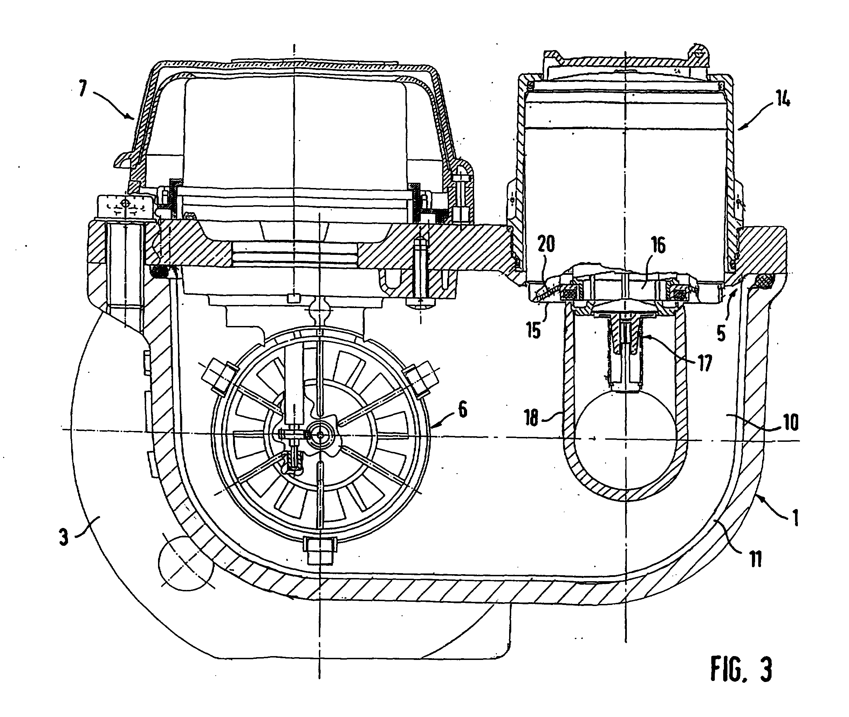

Bei dem ersten Ausführungsbeispiel eines erfindungsgemäßen Verbundwasserzählers nach den Fig. 1 bis 3 ist ein Gehäuse 1 mit einem Einlaßflansch 2 und einem Auslaßflansch 3 vorgesehen, zwischen denen in Richtung des Pfeils P die zu messende Flüssigkeit strömt. Am Deckel 4, der eine großflächige Öffnung 5 auf der Oberseite des Gehäuses 1 abdichtend verschließt, ist zum einen der Meßeinsatz 6 des Hauptzählers 7 und zum anderen der Schaltventileinsatz 8 befestigt, der beim Erreichen eines vorbestimmten Druckes öffnet und den Durchgang durch die Hauptleitung, also zwischen dem Eingangsflansch 2 und dem Ausgangsflansch 3, direkt über den Meßeinsatz 6 und den Schaltventileinsatz 8 sowie die zwischen den beiden angeordnete Öffnung 9 einer Querwand 10 freigibt. Die Querwand 10 ist dabei am Deckel 4 befestigt, vorzugsweise direkt angeformt. An den Stirnkanten der Querwand 10 ist eine U-förmig umlaufende Dichtung 11 vorgesehen, die beim Aufsetzen des Deckels und dem Eingreifen der Querwand in das Gehäuse dieses Gehäuse in eine stromaufwärtige Kammer 12 und eine stromabwärtige Kammer 13 unterteilt. Neben dem Hauptzähler 7 und dem an ihm hängenden Meßeinsatz 6 ist auch der Nebenzähler 14 auf der stromaufwärtigen Seite der Querwand 10, also innerhalb der stromaufwärtigen Kammer 12, am Deckel befestigt, wobei das Wasser aus der stromaufwärtigen Kammer 12 in Richtung der Pfeile in einen ringförmigen Einlaß 15 einströmen kann und durch einen zentralen Auslaß 16 über ein unmittelbar daran anschließendes Steuerventil 17 wieder austritt. Das Steuerventil liegt dabei innerhalb eines die Umgehungsleitung für den Nebenzähler bildenden Verbindungsrohrs 18, das den Auslaß 16 des Nebenzählers mit einer Öffnung 19 der Querwand verbindet. Das Steuerventil 17, welches zum Steuern des Schaltpunktes des Schaltventileinsatzes 8 dient, kann dabei bevorzugt gleichzeitig als Rückschlagventil ausgebildet sein. Bei 20 erkennt man ein Einlaufsieb in der Einlaufringöffnung 15 des Nebenzählers.

Durch die erfindungsgemäße Ausbildung ergibt sich ein sehr kompakt aufgebauter Verbundwasserzähler, dessen Deckel mit den daran befestigten Meßeinheiten als getrennt eichbarer und damit beglaubigungsfähiger Einsatz ausgebildet sein kann, der bei einer erneuten Eichung eines solchen Geräts lediglich den Austausch des Deckels mit den daran hängenden Bauteilen gegen eine neue geeichte Baugruppe erfordert. Das Ausbauen des Gehäuses des Verbundwasserzählers aus der Leitung ist damit überhaupt nicht mehr notwendig.

Das Verbindungsrohr 18 kann als einfaches dünnwandiges Rohr ausgebildet sein, da es lediglich den Differenzdruck zwischen der stromaufwärtigen Kammer 12 und der stromabwärtigen Kammer 13, also etwa 1 Bar aushalten muß und nicht den vollen Betriebsdruck, wie dies dann der Fall ist, wenn die Umgehungsleitung wie bei bekannten Verbundwasserzählern, außerhalb des Gehäuses 1 als Bypassleitung verläuft.

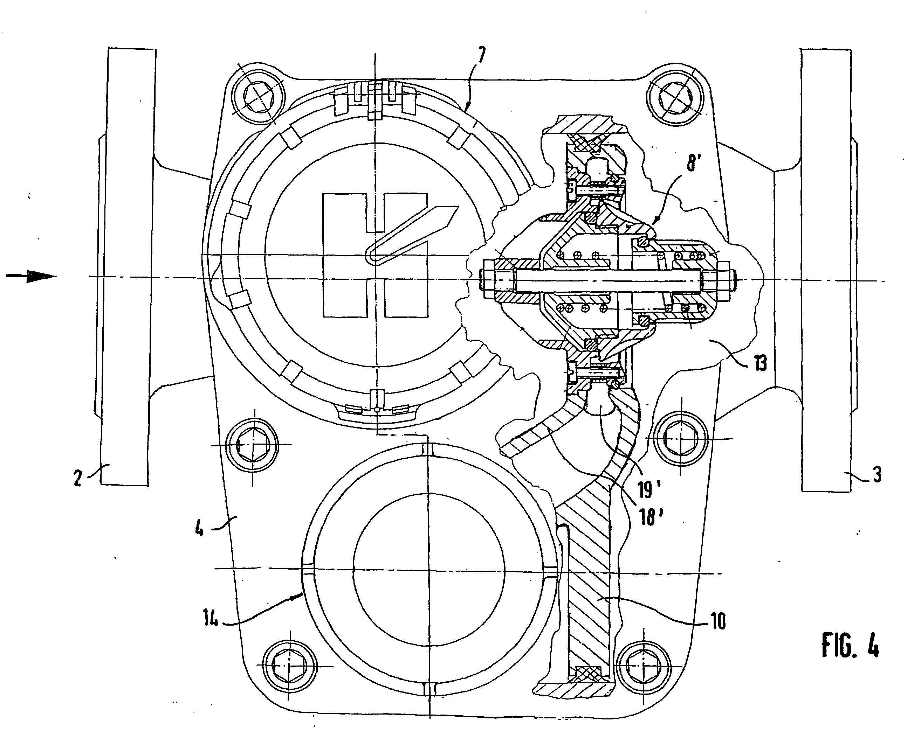

Das Ausführungsbeispiel nach Fig. 4 unterscheidet sich von dem nach den Fig. 1 bis 3 im wesentlichen dadurch, daß ein anderer Schaltventileinsatz 8' Verwendung findet, bei dem das Steuern des Schaltpunktes nicht durch ein Steuerventil 17 wie nach den Fig. 1 bis 3 erfolgt, sondern dadurch, daß das Wasser der Nebenzählerleitung, also das Wasser des Verbindungsrohrs 18' nicht unmittelbar in die stromabwärtige Kammer 13 ausmündet, sondern in den Schaltventileinsatz 8' und erst von diesem in die stromabwärtige Kammer 13 gelangt. Im übrigen ist der Verbundwasserzähler nach Fig. 4 in gleicher Weise ausgebildet wie der nach den Fig. 1 bis 3.

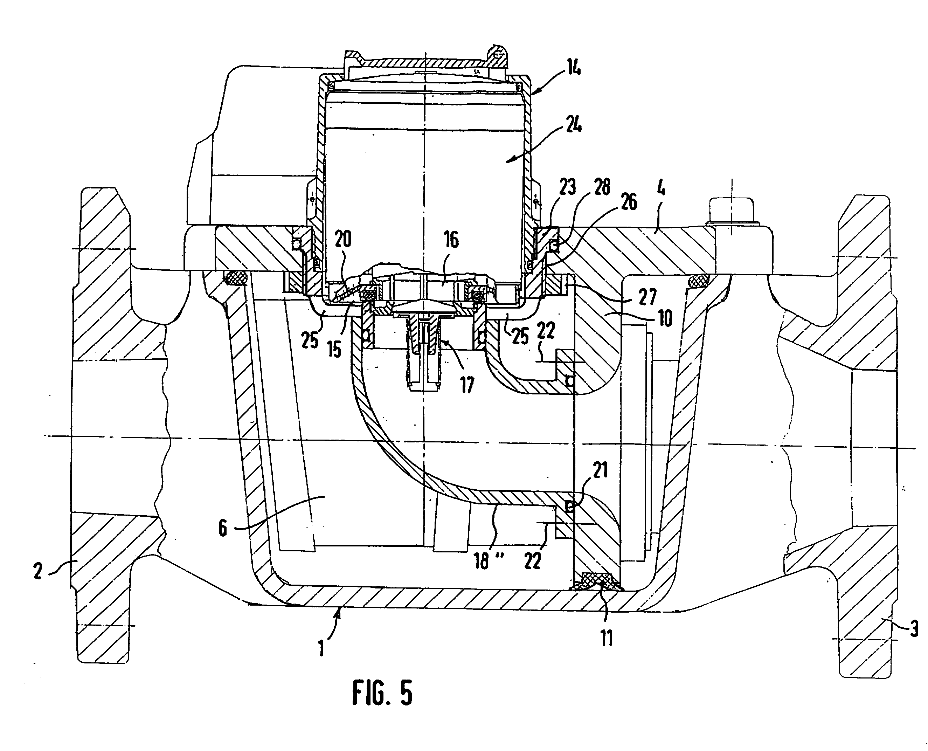

Die Ausführungsform eines erfindungsgemäßen Verbundwasserzählers nach Fig. 5 unterscheidet sich von der nach den Fig. 1 bis 3 zum einen dadurch, daß das Verbindungsrohr 18" nicht an der Querwand 10 angeformt ist, sondern ein separates Bauteil, vorzugsweise aus Kunststoff ist, das über einen Dichtring 21 an der Querwand anliegt und wie bei 22 angedeutet, durch Schrauben an der Querwand befestigt ist. Darüber hinaus ist im Deckel 4 des Verbundwasserzählers nach Fig. 5 ein Einsatz 23 in Form einer Messingbuchse eingebracht, die das Auswechseln der kompletten Meßpatrone 24 des Nebenzählers 14 verbessert. Bei 25 sind Verstärkungsrippen zu erkennen. Der als Messingbuchse ausgebildete Einsatz 23 ist durch einen auf einen Gewindeabschnitt 26 aufgeschraubten Gewindering 27 unter Verdrückung eines Dichtrings 28 am Deckel 4 befestigt.

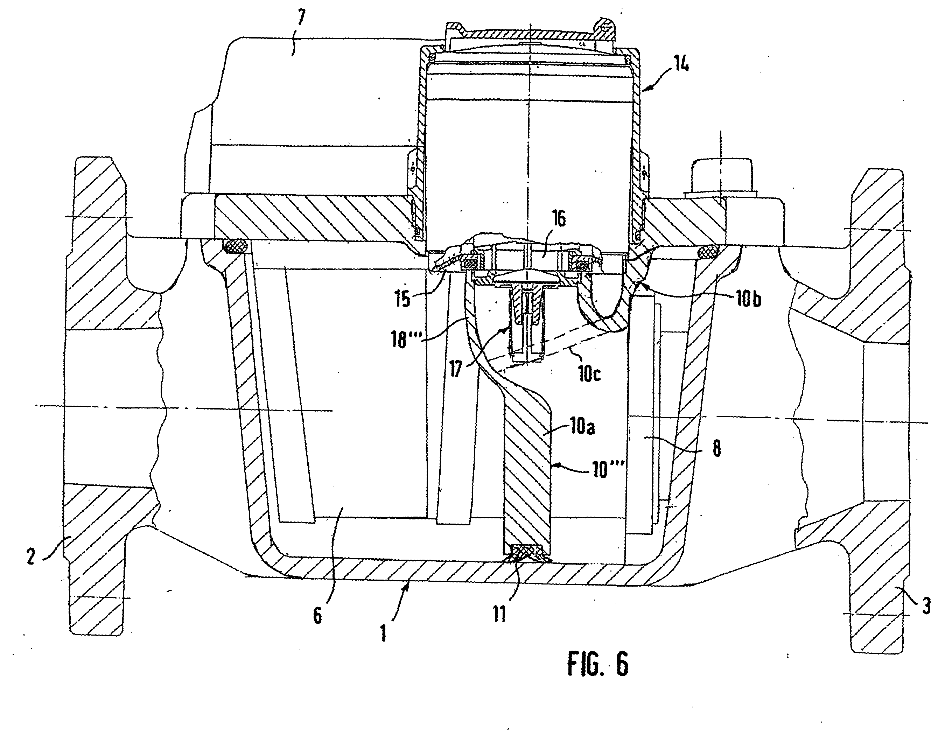

Die in Fig. 6 angedeutete Ausführungsform eines erfindungsgemäßen Verbundwasserzählers umfaßt eine im wesentlichen Z-förmig gewinkelte Querwand 10"' mit einem unteren Abschnitt 10a und einem oberen Abschnitt 10b, die durch einen Zwischenabschnitt 10c miteinander verbunden sind. Diese gewinkelte Ausbildung der Querwand 10"' ermöglicht eine Anordnung des Nebenzählers 14 direkt über dem unteren Hauptabschnitt 10a der Querwand und somit eine stärkere Längsversetzung des Nebenzählers 14 gegenüber dem Hauptzähler 7, so daß umgekehrt die beiden Zähler in der Längsdurchgangsmittelebene näher gegeneinander gerückt sein können und somit noch eine kompaktere Bauform erzielt werden kann.

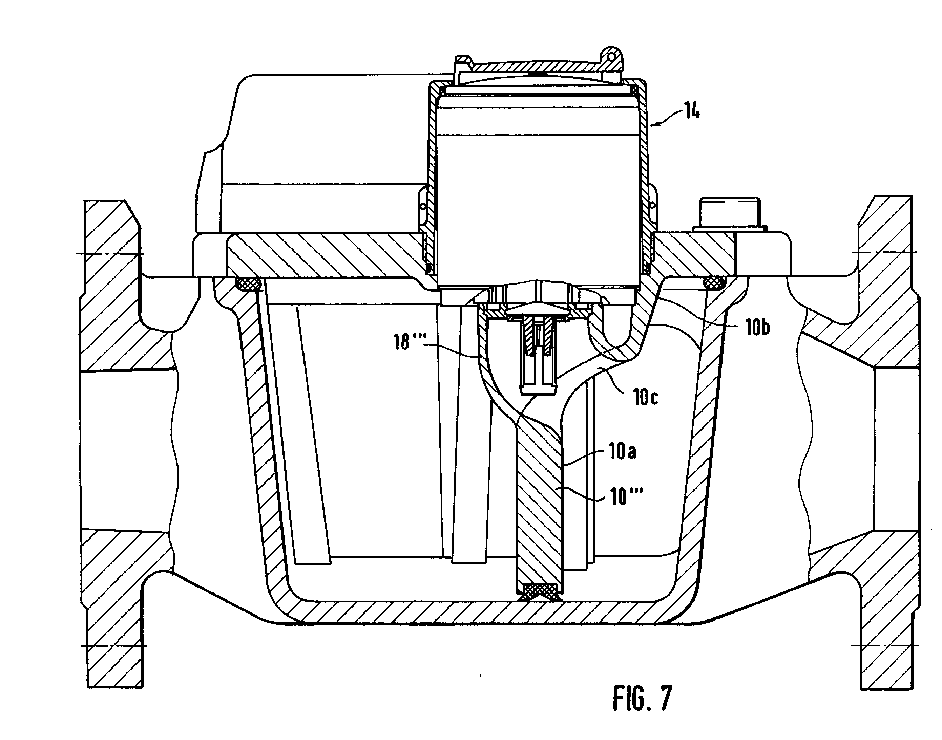

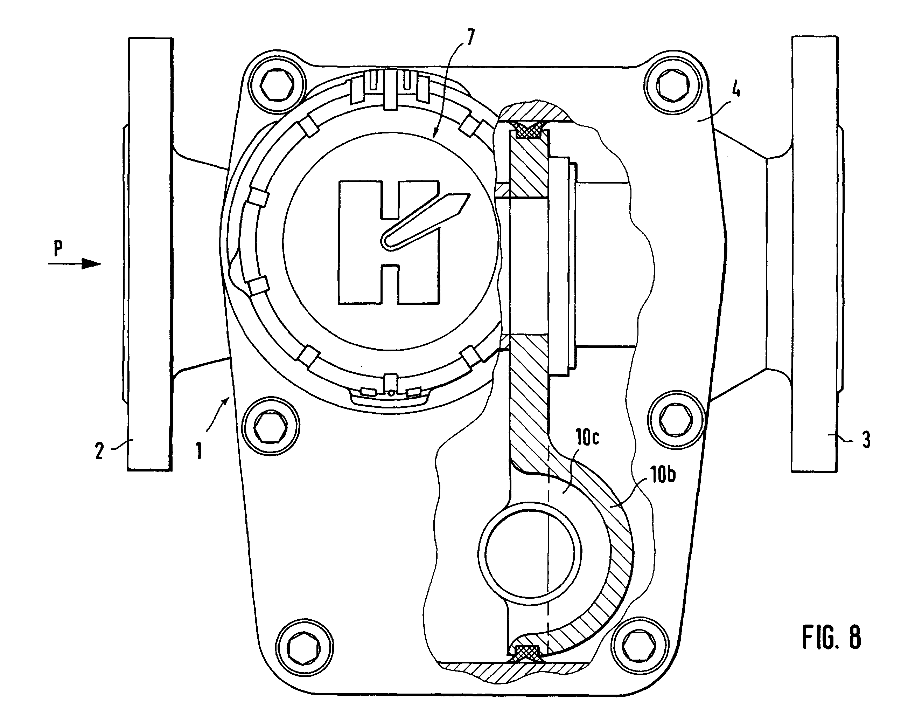

Die in den Figuren 7 und 8 angedeutete weitere Ausführungsform eines erfindungsgemäßen Verbundzählers entspricht grundsätzlich dem Aufbau der Ausführungsform nach Fig. 6. Abweichend davon ist aber nicht die Querwand 10"' insgesamt Z-förmig ausgebildet, sondern sie ist lediglich mit einer knierohr-artigen Ausbuchtung 10b, 10c versehen, in die das Verbindungsrohr 18"' einmündet. Auch hier ergibt sich eine Anordnung des Nebenzählers 14 direkt über dem unteren Hauptabschnitt 10a der Querwand.

## Patentansprüche

1. Verbundwasserzähler, bestehend aus einem an eine Hauptleitung anschließbaren Hauptzähler (7), zur Erfassung größerer Durchflußmengen, und einem in einer Umgehungsleitung angeordneten Nebenzähler (14) zur Erfassung kleinerer Durchflußmengen, wobei dem Meßeinsatz (6) des Hauptzählers (7) ein mit ihm verbundener, den Durchgang durch die Hauptleitung bei Erreichen eines vorbestimmten Druckes öffnender, Schaltventileinsatz (8) nachgeschaltet ist und der Meßeinsatz (6) des Hauptzählers (7) ebenso wie der Nebenzähler (14) in einem Gehäuse (1) mit einer das Gehäuse in eine stromaufwärtige und stromabwärtige Kammer (12, 13) unterteilenden Querwand (10) mit einer Durchlaßöffnung (9) zwischen den beiden Einsätzen (6, 8) angeordnet sind, mit dessen Deckel (4) sie in Verbindung stehen derart, daß sie als Einheit ausbaubar sind, dadurch gekennzeichnet, daß die Querwand (10) am Deckel (4) befestigt, vorzugsweise angeformt, und durch Dichtungen (11) gegen das Gehäuse (1) abgedichtet ist, daß der Meßeinsatz (6) des Hauptzählers (7) und der Nebenzähler (14) beide auf der stromaufwärtigen Seite der Querwand (10) am Deckel (4) befestigt sind und daß die Umgehungsleitung ein den Auslaß (16) des Nebenzählers (14), dessen Einlaß (15) in der Einsetzausnehmung des Deckels (4) liegt, mit einer Öffnung (19) der Querwand (10) verbindendes, innerhalb der stromaufwärtigen Kammer (12) liegendes, kurzes Verbindungsrohr (18, 18", 18"') ist.

2. Verbundwasserzähler nach Anspruch 1, dadurch gekennzeichnet, daß die Querwand (10"') im wesentlichen Z-förmig gewinkelt ist und daß der auf einem Einrohr-Anschluß sitzende Nebenzähler (14) direkt über dem auf dem Gehäuseboden aufsitzenden unteren Hauptabschnitt (10a) der Querwand (10"') angeordnet ist, während das Verbindungsrohr (18) in das abgewinkelte Mittelstück (10c) einmündet.

3. Verbundwasserzähler nach Anspruch 1 oder 2, dadurch gekennzeichnet, daß dem Nebenzähler (14) ein Steuerventil (17) zum Steuern des Schaltpunktes des Schaltventileinsatzes (8) nachgeschaltet ist.

4. Verbundwasserzähler nach Anspruch 3, dadurch gekennzeichnet, daß das Steuerventil (17) im Verbindungsrohr (18, 18", 18"'), vorzugsweise unmittelbar hinter dem Auslaß (16) des Nebenzählers (14), angeordnet ist.

5. Verbundwasserzähler nach Anspruch 3 oder 4, dadurch gekennzeichnet, daß das Steuerventil (17) als Rückschlagventil ausgebildet ist.

6. Verbundwasserzähler nach Anspruch 1, dadurch gekennzeichnet, daß das Verbindungsrohr (18') in den Schaltventileinsatz (8) einmündet.

7. Verbundwasserzähler nach einem der Ansprüche 1 bis 6, dadurch gekennzeichnet, daß das Verbindungsrohr (18, 18', 18"') an der Querwand (10, 10"') angeformt ist.

8. Verbundwasserzähler nach einem der Ansprüche 1 bis 6, dadurch gekennzeichnet, daß das als separates Bauteil, vorzugsweise aus Kunststoff, gefertigte Verbindungsrohr (18") an der Querwand (10) befestigt, insbesondere angeschraubt ist.

9. Verbundwasserzähler nach einem der Ansprüche 1 bis 8, dadurch gekennzeichnet, daß im Deckel (4) ein Einsatz (23), vorzugsweise aus Messing, zur Aufnahme der kompletten Meßpatrone (24) des Nebenzählers (14) eingebracht ist.

## Claims

1. Compound water meter, consisting of a main meter (7) connectable to a mains line for detecting the larger volumes of through-flow, and of a subsidiary meter (14) disposed in a by-pass for detecting the smaller volumes of through-flow, wherein connected in series with the measuring insert (6) of the main meter (7) is a switch valve insert (8), which opens the passage through the mains line when a specified pressure is reached, and the measuring insert (6) of the main meter (7), together with the subsidiary meter (14), is housed in a housing (4) with a transverse wall (10) dividing the housing into an upstream and a downstream chamber (12, 13) with a passage aperture (9) between the two inserts (6, 8), with whose lid (4) they communicate, in such a manner that they can be dismantled as a unit, characterised in that the transverse wall (10) is fixed to the lid (4), preferably is integrally moulded therewith, and is sealed by seals (11) with respect to the housing (1), in that the measuring insert (6) of the main meter (7) and of the subsidiary meter (14) are both fixed to the upstream side of the transverse wall (10), and in that the by-pass is a short connecting pipe (18, 18", 18"') lying inside the upstream chamber (12) and connecting the outlet (16) of the subsidiary meter (14), whose inlet (15) lies in the insertion recess of the lid (4), to an aperture (19) in the transverse wall (10).

2. Compound water meter according to claim 1, characterised in that the transverse wall (10"') is substantially bent into a Z shape, and in that the subsidiary meter (14) resting on an incoming-pipe junction is disposed directly over the lower main section (10a) of the transverse wall (10"') resting on the housing base, whilst the connecting pipe (18) opens into the bent-back middle piece (10c).

3. Compound water meter according to claim 1 or 2, characterised in that a control valve (17) for controlling the switching point of the switch valve insert (8) is connected in series to the subsidiary meter (14).

4. Compound water meter according to claim 3, characterised in that the control valve (17) is disposed in the connecting pipe (18, 18", 18"'), preferably directly behind the outlet (16) of the subsidiary meter (14).

5. Compound water meter according to claim 3 or 4, characterised in that the control valve (17) is formed as a non-return valve.

6. Compound water meter according to claim 1, characterised in that the connecting pipe (18') opens into the switch valve insert (8).

7. Compound water meter according to one of claims 1 to 6, characterised in that the connecting pipe (18, 18', 18"') is integrally formed on the transverse wall (10, 10"').

8. Compound water meter according to one of claims 1 to 6, characterised in that the connecting pipe (18") manufactured as a separate component, preferably of plastics material, is fixed, in particular screwed, to the transverse wall (10).

9. Compound water meter according to one of claims 1 to 8, characterised in that in the lid (4) an insert (23), preferably of brass, is mounted for receiving the complete measuring cartridge (24) of the subsidiary meter (14).

## Revendications

1. Compteur d'eau composé, constitué par un compteur principal (7), qui peut être raccordé à une conduite principale et sert à détecter des débits assez importants et un compteur secondaire (14) disposé dans une conduite de contournement et servant à détecter des débits plus faibles, dans lequel en aval de l'insert de mesure (6) du compteur principal (7) est monté un insert de soupape de commutation (8), qui est relié à l'insert de mesure et ouvre le passage dans la conduite principale lorsqu'une pression prédéterminée est atteinte, l'insert de mesure (6) du compteur principal (7) ainsi que le compteur secondaire (14) étant disposés dans un boîtier (1) comportant une paroi transversale (10) qui divise le boîtier en une chambre amont et une chambre aval (12, 13) et comporte une ouverture de passage (9) entre les deux inserts (7, 8) qui sont reliés au couvercle (4) du compteur de telle sorte qu'ils peuvent être démontés sous la forme d'une unité, caractérisé en ce que la paroi transversale (10) est fixée, de préférence en étant formée par moulage, sur le couvercle (4) et est fermée de façon étanche vis-à-vis du boîtier (1) par des garnitures d'étanchéité (11), que l'insert de mesure (6) du compteur principal (7) et le compteur secondaire (14) sont fixés tous deux au côté amont de la paroi transversale (10) sur le couvercle (4) et que la conduite de contournement est un court tube de liaison (18, 18", 18"') qui relie la sortie (16) du compteur secondaire (14), dont l'entrée (15) est située dans l'ouverture d'insertion du couvercle (4), à une ouverture (19) de la paroi transversale (10) et est situé à l'intérieur de la chambre amont (12).

2. Compteur d'eau composé selon la revendication 1, caractérisé en ce que la paroi transversale (10"') est coudée essentiellement en forme de Z et que le compteur secondaire (14), qui est monté sur un raccord unitubulaire, est disposé directement au-dessus de la partie principale inférieure (10a), qui prend appui sur la base du boîtier, de la paroi transversale (10"'), tandis que le tube de liaison (18) débouche dans la partie médiane coudée (10c).

3. Compteur d'eau composé selon la revendication 1 ou 2, caractérisé en ce qu'une soupape de commande (17) servant à commander le point de commutation de l'insert (8) de la soupape de commutation est montée en aval du compteur secondaire (14).

4. Compteur d'eau composé selon la revendication 3, caractérisé en ce que la soupape de commande (17) est disposée dans le tube de liaison (18, 18", 18"'), de préférence directement en arrière de la sortie (16) du compteur secondaire (14).

5. Compteur d'eau composé selon la revendication 3 ou 4, caractérisé en ce que la soupape de commande (17) est agencée sous la forme d'une soupape antiretour.

6. Compteur d'eau composé selon la revendication 1, caractérisé en ce que le tube de liaison (18') débouche dans l'insert (8) de la soupape de commutation.

7. Compteur d'eau composé selon l'une des revendications 1 à 6, caractérisé en ce que le tube de liaison (18, 18', 18"') est formé par moulage sur la paroi transversale (10, 10"').

8. Compteur d'eau composé selon l'une des revendications 1 à 6, caractérisé en ce que le tube de liaison (18"), qui est réalisé sous la forme d'un composant séparé de préférence en matière plastique, est situé à la paroi transversale (10), notamment par vissage.

9. Compteur d'eau composé selon l'une des revendications 1 à 8, caractérisé en ce qu'un insert (23), de préférence en laiton, servant à loger la cartouche de mesure complète (24) du compteur secondaire (14) est inséré dans le couvercle (4).
